# FASCICULE DE BREVET EUROPEEN

(11) **EP 1 814 714 B1**
(45) Date de publication et mention de la délivrance du brevet: **29.07.2009**
(21) Numéro de dépôt: 05817032.5
(22) Date de dépôt: 14.11.2005
(51) Int. Cl.: B29C 49/48

(54) **MOULE A INSERT POUR UNE MACHINE DE SOUFFLAGE DE RECIPIENTS**
FORM MIT EINSATZ FÜR EIN BLASFORMUNGSGERÄT FÜR BEHÄLTER
MOULD WITH INSERT FOR A CONTAINER BLOW MOULDING MACHINE

(30) Priorité: 18.11.2004 FR 0412258
(43) Date de publication de la demande: 08.08.2007
(73) Titulaire: SIDEL PARTICIPATIONS, 76930 Octeville-sur-Mer (FR)
(72) Inventeur: TONGA, Jules, c/o SIDEL PARTICIPATIONS, F-76930 Octeville sur Mer (FR); DUBOS, Lionel, c/o SIDEL PARTICIPATIONS, F-76930 Octeville sur Mer (FR); LEROUX, Marc, c/o SIDEL PARTICIPATIONS, F-76930 Octeville sur Mer (FR)
(74) Mandataire: Cabinet Plasseraud
(86) Numéro de dépôt international: PCT/FR2005/002815
(87) Numéro de publication internationale: WO 2006/053970

(56) Documents cités:
- EP-A- 0 976 517
- DE-C1- 3 613 543
- US-A- 4 822 543
- PATENT ABSTRACTS OF JAPAN vol. 2000, no. 02, 29 février 2000 (2000-02-29) & JP 11 300748 A (KAO CORP), 2 novembre 1999 (1999-11-02)
- PATENT ABSTRACTS OF JAPAN vol. 007, no. 116 (M-216), 20 mai 1983 (1983-05-20) & JP 58 036418 A (SHOWA DENKO KK), 3 mars 1983 (1983-03-03)

## Description

L'invention a trait au soufflage des récipients. Elle concerne plus particulièrement un moule pour une machine de soufflage de récipients, lequel soufflage s'effectue par introduction dans le moule d'une ébauche (généralement en matière thermoplastique) préalablement chauffée, puis par mise sous pression de l'ébauche pour lui conférer dans le moule la forme souhaitée.

Il est connu de l'homme du métier que le soufflage n'est pas réalisé in abstracto, mais que les opérations effectuées lors du soufflage (telles que la réalisation ou non d'un traitement thermique du récipient dans le moule, la présence ou non d'un refroidissement du récipient en sortie de moule, etc.), ainsi que les paramètres de la machine (tels que la température du moule), dépendent de l'utilisation prévue du récipient.

Ainsi, certaines applications nécessitent que le moule soit refroidi : c'est par exemple le cas de la fabrication des récipients destinés à recevoir des eaux plates.

Par contre, d'autres applications nécessitent que le moule soit réchauffé : ainsi, le remplissage à chaud (par exemple avec des liquides tels que thé, jus de fruit pasteurisé, etc.) ou encore la pasteurisation du contenu suppose que l'on chauffe le moule à une température prédéterminée, afin d'effectuer une thermofixation de la matière, les paramètres de réglage de la température du moule dépendant de la température du liquide de remplissage ou des conditions de pasteurisation.

La régulation de la température du moule (refroidissement ou réchauffage) s'effectue en faisant circuler un fluide caloporteur (par exemple eau de ville ou eau réfrigérée dans le cas d'un refroidissement ; eau ou huile chaude dans le cas d'un chauffage, le choix du fluide dépendant de la température qu'il convient d'atteindre) dans des canalisations ménagées dans la paroi du moule, autour de la cavité de moulage.

Il est par ailleurs connu de l'homme du métier que le remplissage à chaud ou la pasteurisation peut provoquer des déformations sensibles du récipient qui dépendent de la température du liquide au moment de son remplissage ou des paramètres de pasteurisation, et ce même si le récipient a subi au préalable un traitement de thermofixation pour le rendre résistant à la chaleur, lesquelles déformations peuvent être plus ou moins irréversibles, de sorte qu'elles ne disparaissent pas totalement après que le liquide ait refroidi. Ainsi, un liquide (ou un réchauffage du récipient) à une température de 80°C provoque une dilatation du récipient supérieure à celle que provoquerait un liquide à une température de 60°C ; en outre, quand bien même le récipient rempli à chaud ou pasteurisé ne se déformerait pas au moment de son remplissage ou de la pasteurisation, la baisse de pression interne qui accompagnerait le refroidissement du contenu (après bouchage) provoquerait une réduction de volume du récipient, qui pourrait se traduire par une contraction de certaines zones de la paroi du récipient.

Afin de remédier, au moins partiellement, à ces inconvénients, il a été proposé par le passé d'anticiper les déformations résiduelles du récipient à l'issue du remplissage à chaud ou de la pasteurisation et/ou du refroidissement en disposant un insert de moulage dans le moule, lequel insert permet de former des zones (panneaux ou similaires) de déformation sur le récipient et peut être positionné différemment en fonction de la variation de volume prévue pour le récipient lors du remplissage, ce afin de compenser lesdites déformations.

Cette solution permet d'utiliser un même moule pour des récipients de formes similaires mais destinés à recevoir des liquides à températures différentes, ou traités à chaud différemment : dans ce cas, les récipients sont différents à l'issue du soufflage, mais deviennent identiques ou similaires à l'issue du remplissage et/ou du refroidissement.

Il est encore connu d'utiliser des inserts dans d'autres applications que le remplissage à chaud ou la pasteurisation, à savoir pour des récipients a priori non susceptibles de subir un traitement prouvant conduire à leur déformation après leur fabrication. C'est par exemple le cas lorsque, partant d'une forme de base commune, un fabricant désire la décliner afin de réaliser des séries différentes de récipients, dans lesquelles les différences peuvent se situer au niveau de détails de forme (apposition de motifs moulés, tels que logos, différents d'une série à l'autre) et/ou du volume : un exemple connu concerne la réalisation de séries promotionnelles de récipients ayant un volume supérieur au volume de base, auquel cas les inserts sont utilisés pour augmenter la hauteur des récipients de telles séries.

Cependant, l'emploi d'inserts, pour quelque raison que ce soit, pose, notamment dans les zones des inserts, des problèmes d'uniformité de la régulation thermique du moule. Cette absence d'uniformité peut avoir pour conséquence dans tous les cas une difficulté à former des récipients corrects, c'est-à-dire des récipients dans lesquels la répartition de matière est optimisée. De plus, dans le cas de récipients destinés à être remplis à chaud ou pasteurisés, de tels problèmes de régulation thermique peuvent avoir pour autre conséquence l'apparition de contraintes résiduelles dans le récipient, qui s'expriment lors du remplissage ou de la pasteurisation par des déformations incorrigibles nuisant à la tenue et/ou à l'esthétique finale du récipient.

Par ailleurs, DE 36 13 543 C1 décrit un moule de soufflage de récipients, dépourvu d'insert de moulage, et dans lequel des circuits de refroidissement par circulation d'eau dans des canaux sont réalisés, pour partie dans deux demi-moules complémentaires et pour partie dans deux plaques de support, dont chacune est fixée sur la face externe d'un demi-moule respectif, du côté opposé à la cavité de moulage de ce demi-moule.

L'invention vise notamment à résoudre les inconvénients précités des moules à insert, en proposant une solution permettant d'optimiser la régulation thermique du moule lors du soufflage.

A cet effet, l'invention propose un moule pour une machine de soufflage de récipients, du type connu par JP 11 300 748 A, et comportant :
- une paroi définissant une cavité répartie autour d'un axe principal, cette paroi étant munie de canalisations pour la circulation d'un fluide caloporteur au sein de la paroi, et
- au moins un insert de moulage monté sur la paroi, et muni d'au moins un conduit qui communique avec une canalisation de la paroi, et qui se caractérise en ce qu'il comporte au moins une cale de réglage de la position de l'insert par rapport à l'axe principal, interposée entre la paroi et l'insert, cette cale étant percée d'au moins une lumière qui débouche, d'une part, sur une canalisation dans la paroi, et, d'autre part, sur un conduit dans l'insert.

De la sorte, le fluide caloporteur peut circuler au sein de l'insert de moulage, qui est de ce fait porté sensiblement à la même température que la paroi du moule.

Il est ainsi possible d'obtenir une température sensiblement uniforme du moule lors du soufflage. Ceci s'effectue au bénéfice de la stabilité mécanique du récipient lors d'un remplissage à chaud, puisque le moule peut être chauffé de façon sensiblement uniforme.

Suivant un mode de réalisation, ledit conduit se présente sous la forme d'une gorge creusée dans une face de l'insert tournée vers la paroi ; il peut présenter des méandres, de sorte à augmenter l'échange de chaleur.

Suivant un mode de réalisation, la position de l'insert est réglable perpendiculairement à l'axe principal de la paroi.

Il est aussi possible, pour un même insert, de régler la position de celui-ci en fonction des besoins définis ci-dessus, sans que la circulation du fluide caloporteur n'en soit affectée.

Cette cale se présente par exemple sous la forme d'une plaque, dont le contour suit celui de l'insert, lequel peut être muni de pions en saillie qui traversent des trous de positionnement percés dans la cale.

Suivant un mode de réalisation, la paroi du moule est munie d'au moins deux canalisations, à savoir une canalisation primaire et une canalisation secondaire, l'insert étant muni d'au moins deux conduits, à savoir un conduit primaire et un conduit secondaire.

Dans un mode de réalisation, la cale est percée d'au moins deux lumières, à savoir une lumière primaire qui débouche d'une part sur la canalisation primaire et d'autre part sur le conduit primaire, et une lumière secondaire qui débouche d'une part sur la canalisation secondaire et d'autre part sur le conduit secondaire, les lumières contribuant à offrir une section de passage bien dimensionné pour le fluide caloporteur.

La lumière primaire se présente par exemple sous la forme d'un trou oblong, tandis que la lumière secondaire peut se présenter sous là forme d'un trou circulaire.

La paroi du moule est par exemple creusée d'un logement dans lequel sont conjointement reçus la cale et l'insert, et dans lequel peut déboucher au moins une canalisation dans la paroi, en regard d'une lumière dans la cale.

Par ailleurs, suivant un mode de réalisation, la cale peut se présenter sous la forme d'un jeu de cales pelables.

D'autres objets et avantages de l'invention apparaîtront à la lumière de la description faite ci-après en référence aux dessins annexés dans lesquels :
- la figure 1 est une vue en perspective partielle montrant une partie d'un moule selon l'invention ;
- la figure 2 est une vue en perspective éclatée de la partie de moule de la figure 1 ;
- la figure 3 est une vue similaire à la figure 1, sur laquelle n'apparaissent ni l'insert de moulage ni sa cale ;
- la figure 4 est une vue en perspective de la partie de moule de la figure 3, suivant un autre angle de vue ;
- la figure 5 est une vue en perspective éclatée montrant un insert de moulage et sa cale pour un moule selon l'invention ;

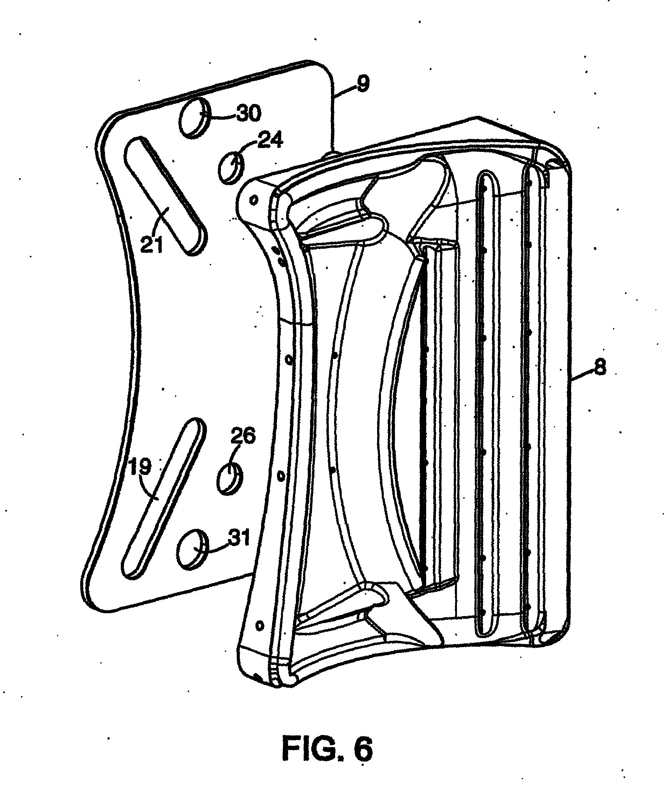

- la figure 6 est une vue en perspective éclatée montrant l'insert et la cale de la figure 5, suivant un autre angle de vue ;
- la figure 7 est une vue en perspective montrant l'insert et la cale assemblés ;

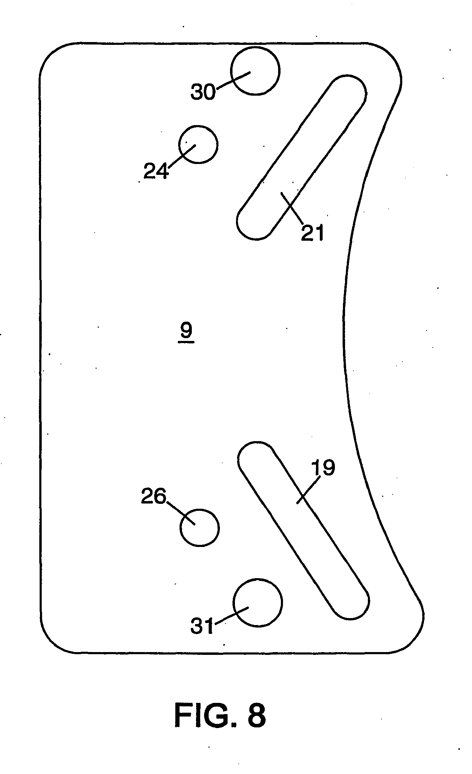

- la figure 8 est une vue en plan montrant une cale pour un moule selon l'invention ; et
- la figure 9 est une vue en plan montrant un insert de moulage pour un moule selon l'invention.

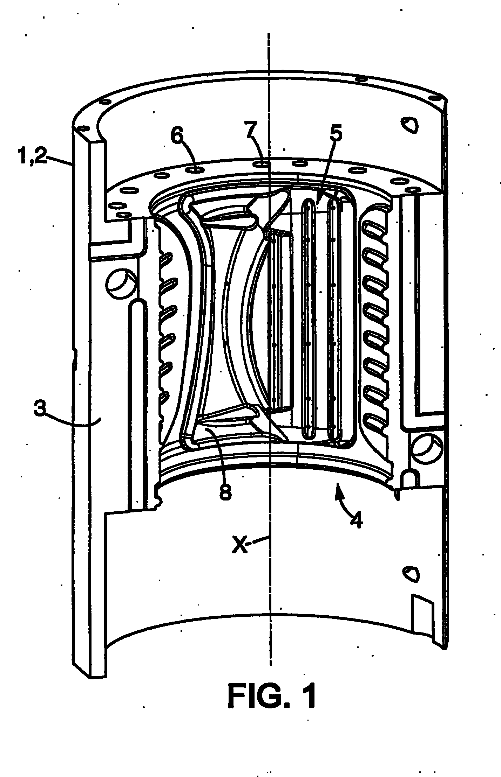

Sur la figure 1 est représentée une partie d'un moule 1 destiné à équiper une machine de soufflage (non représentée), pour le soufflage de récipients (non représentés).

La partie de moule 1 représentée est en fait une portion d'un demi-moule 2, prévue pour répondre à un besoin particulier lié au récipient à former, ce besoin (dont un exemple est donné ci-après) pouvant varier d'un récipient à l'autre et nécessitant des réglages difficiles à obtenir dans un moule monobloc.

Le demi-moule 2 représenté comporte, comme nous le verrons ci-après, un insert rapporté ; il est assemblé à un autre demi-moule (non représenté) qui, pour la formation du corps du récipient, peut soit être identique au demi-moule 2 (c'est-à-dire qu'il peut également comporter un insert rapporté) soit différent (c'est-à-dire qu'il est par exemple monobloc), les deux demi-moules étant complétés par un élément de fond de moule pour la formation du fond du récipient, l'ensemble formant ainsi un moule complet.

Le moule 1 comporte une paroi 3 qui, réalisée en acier ou, de préférence, dans un alliage d'aluminium, définit une cavité 4 (réalisée par un usinage de précision) destinée à recevoir une ébauche (non représentée) également appelée préforme - en.matière thermoplastique, chauffée avant son introduction dans le moule 1 à une température suffisante pour permettre sa déformation lors du soufflage.

Comme cela est visible sur la figure 1, la cavité 4, partiellement représentée sur cette figure, est globalement répartie autour d'un axe principal X qui, définissant une direction longitudinale, s'étend suivant la plus grande dimension de la cavité 4 (c'est-à-dire du récipient), à l'exception d'une zone 5 dans laquelle on souhaite former sur le récipient, lors du soufflage, une empreinte nervurée destinée à en faciliter la préhension.

Comme cela est également visible sur la figure 1, la paroi 3 du moule 1 est munie de canalisations 6, 7 destinées à permettre la circulation au sein de la paroi 3 d'un liquide caloporteur pour la régulation de la température du moule 1.

Ces canalisations 6, 7 se présentent sous la forme d'une pluralité d'alésages parallèles percés longitudinalement dans la paroi 3, et répartis sur la périphérie de celle-ci.

La continuité du circuit de chauffe formé par les canalisations 6, 7 est assurée par des perçages (non représentés) raccordant les canalisations 6, 7 et réalisés dans une partie supérieure du moule, destinée on le rappelle au formage de l'épaule du récipient, non représentée sur les figures.

Parmi ces canalisations, on dénombre notamment une canalisation 6 primaire, dans laquelle le fluide caloporteur circule par exemple du bas vers le haut du moule 1, et une canalisation 7 secondaire, adjacente à la canalisation 6 primaire, et raccordée à celle-ci dans la partie supérieure du moule 1, canalisation 7 secondaire dans laquelle le fluide caloporteur circule à l'inverse du haut vers le bas du moule 1.

Dans la zone 5 où l'on souhaite réaliser l'empreinte dans le récipient, le moule 1 comporte un insert 8 des moulage, monté sur la paroi 3, et dont la position par rapport à celle-ci est réglable transversalement, c'est-à-dire perpendiculairement à l'axe X principal.

Suivant un mode de réalisation, afin de permettre le réglage de la position de l'insert 8, le moule 1 comporte en outre une cale 9 de réglage, interposée entre la paroi 3 et l'insert 8.

L'épaisseur de cette cale 9, qui se présente sous la forme d'une plaque dont le contour épouse sensiblement celui de l'insert 8, est choisie en fonction de la variation de volume prévue du récipient lors de son remplissage ultérieur.

Ainsi, suivant la température du liquide de remplissage, l'épaisseur de cette cale 9 peut être choisie égale à 1 mm, 1,5 mm, ou encore 2 mm, cette épaisseur croissant en pratique avec la température du liquide.

Cette cale 9 peut être usinée en fonction du besoin particulier défini pour le récipient à former. Toutefois, il peut apparaître opportun, au lieu de procéder à la fabrication de la cale, de recourir pour former la cale à un jeu de cales pelables sous la forme d'un empilage de feuilles que l'on pèle en fonction de la cote souhaitée. De telles cales pelables sont dïrectement disponibles dans le commerce, et l'homme du métier pourra simplement faire fabriquer un jeu de cales aux dimensions souhaitées.

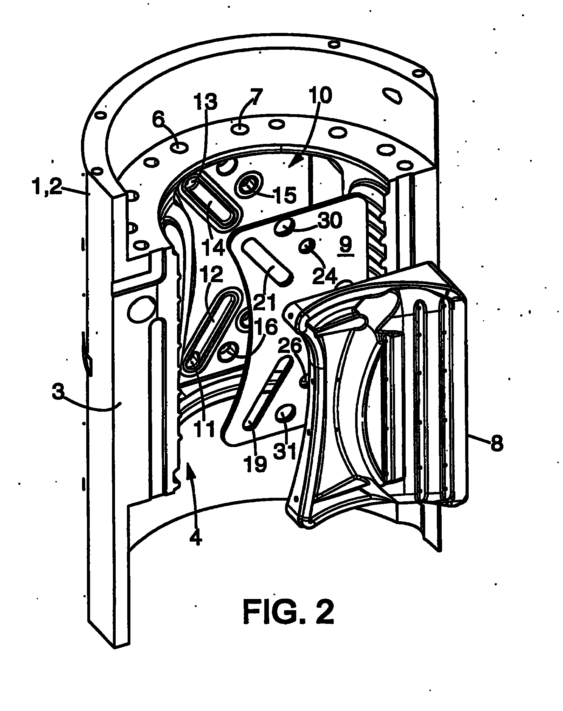

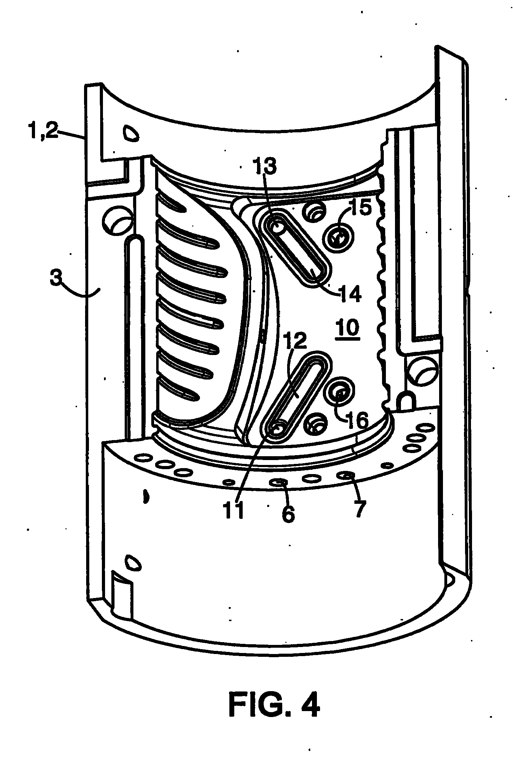

Comme cela est visible sur les figures 2 à 4, la paroi 3 du moule 1 est creusée d'un logement 10 dans lequel sont conjointement reçus la cale 9 et l'insert 8, le contour de ce logement 10 étant complémentaire de celui de l'insert 8.

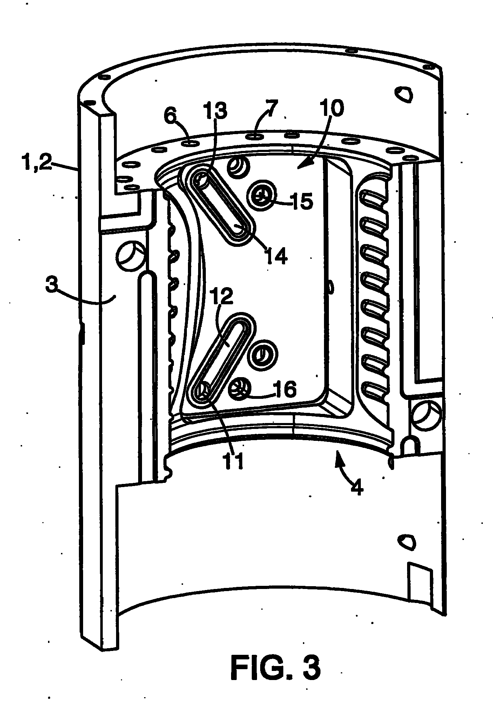

La canalisation 6 primaire débouche, comme représenté sur la figure 3, dans le logement 10 par deux ouvertures, à savoir une ouverture 11 primaire inférieure, qui se prolonge par une gorge 12 inférieure, creusée obliquement dans la paroi 3, et une ouverture 13 primaire supérieure, qui se prolonge par une gorge 14 supérieure, également creusée obliquement dans la paroi 3 ; comme nous le verrons ci-après, ces ouvertures 11, 13 seront mises en communication lors de la mise en place de la cale 9 et de l'insert 8.

De même, la canalisation 7 secondaire débouche dans le logement 10 par deux ouvertures, à savoir une ouverture 15 secondaire supérieure et une ouverture 16 secondaire inférieure, qui seront aussi mises en communication lors de la mise en place de la cale 9 et de l'insert 8.

Afin de permettre l'obtention d'une température uniforme au niveau du moule 1 lors du soufflage de l'ébauche, la cale 9 et l'insert 8 sont agencés pour permettre la circulation au sein de l'insert 8 du fluide caloporteur. Concrètement, on prolonge les canalisations 6, 7, interrompues au niveau du logement 10, dans la cale 9 et dans l'insert 8.

A cet effet, l'insert 8 est muni d'un conduit 17 primaire sous la forme d'une gorge percée dans une face 18 de l'insert 8 dite face arrière, tournée vers la cale 9 (c'est-à-dire vers la paroi 3), celle-ci étant quant à elle percée d'une ouverture ou lumière 19 primaire inférieure sous la forme d'un trou oblong qui, lorsque la cale 9 est en place dans le logement 10 entre la paroi 3 et l'insert 8, se trouve en regard de l'ouverture 11 primaire inférieure et débouche de ce fait sur la canalisation 6 primaire réalisée dans la paroi 3, cette, lumière 19 primaire inférieure débouchant par ailleurs sur une portion 20 inférieure, oblique, du conduit 17 primaire.

La cale 9 est en outre munie d'une ouverture ou lumière 21 primaire supérieure sous la forme d'un trou oblong qui, lorsque la cale 9 est en place dans le logement 10 entre la paroi 3 et l'insert 8, se trouve en regard de l'ouverture 13 primaire supérieure et débouche de ce fait sur la canalisation 6 primaire réalisée dans la paroi 3, cette lumière 21 primaire supérieure débouchant par ailleurs sur une portion 22 supérieure, oblique, du conduit 17 primaire.

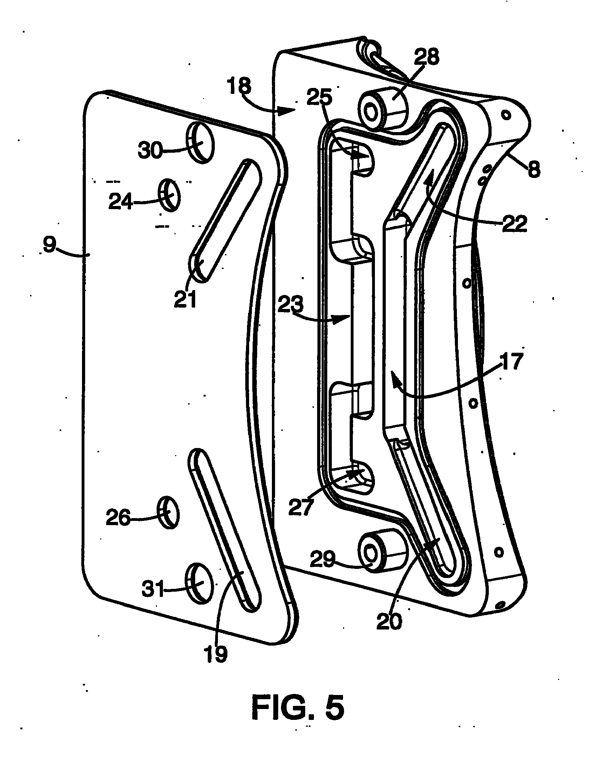

En outre, comme cela est visible sur la figure 5 notamment, l'insert 8 est muni d'un conduit 23 secondaire sous la forme d'une gorge percée dans la face 18 arrière de l'insert 8, la cale 9 étant quant à elle percée d'une lumière 24 secondaire supérieure sous la forme d'un trou circulaire qui, lorsque la cale 9 est en place dans le logement 10 entre la paroi 3 et l'insert 8, se trouve en regard de l'ouverture 15 secondaire supérieure et débouche de ce fait sur la canalisation 7 secondaire réalisée dans la paroi 3, cette lumière 24 secondaire supérieure débouchant par ailleurs sur une portion 25 supérieure du conduit 23 secondaire.

La cale 9 est en outre munie d'une lumière 26 secondaire inférieure sous la forme d'un trou circulaire qui, lorsque la cale 9 est en place dans le logement 10 entre la paroi 3 et l'insert 8, se trouve en regard de l'ouverture 16 secondaire inférieure et débouche de ce fait sur la canalisation 7 secondaire, cette lumière 26 secondaire inférieure débouchant par ailleurs sur une portion 27 inférieure du conduit 23 secondaire.

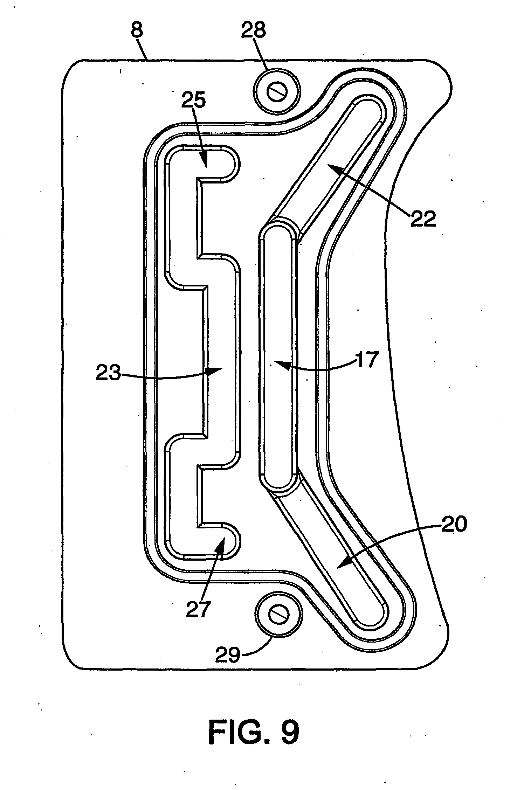

Comme cela est bien visible sur les figures 5 et 9, les conduits 17, 23 dans l'insert 8 présentent des méandres, de manière à permettre une meilleure répartition de l'échange thermique entre le fluide caloporteur et la masse de l'insert 8.

De plus, comme cela est également bien visible sur la figure 5, les conduits 17 et 23 ne présentent pas une profondeur uniforme : cela tient à la forme de l'insert 8, dont l'épaisseur mesurée perpendiculairement à l'axe X principal, n'est pas uniforme : plus mince dans ses parties supérieure et inférieure (les conduits 17 et 23 y étant par conséquent moins profonds), il est plus épais au centre (les conduits 17 et 23 y étant par conséquent plus profonds). Les lumières oblongues ménagées dans la cale 9, qui suivent les parties les moins profondes des conduits 17 et 23, permettent donc de garantir un minimum de section pour le passage du fluide caloporteur, afin d'éviter les pertes de charge le long du circuit du fluide.

Lorsque la cale 9 et l'insert 8 sont en place dans le logement 10, la gorge 12 inférieure est en regard de la lumière 19 primaire inférieure et de la portion 20 inférieure du conduit 17 primaire, tandis que la gorge 14 supérieure est en regard de la lumière 21 primaire supérieure et de la portion 22 supérieure du conduit 17 primaire.

Par ailleurs, l'ouverture 15 secondaire supérieure est en regard de la lumière 24 secondaire supérieure et de la portion 25 supérieure du conduit 23 secondaire, tandis que l'ouverture 16 secondaire inférieure est en regard de la lumière 26 secondaire inférieure et de la portion 27 inférieure du conduit 23 secondaire.

On crée ainsi, tout en en assurant la continuité, une dérivation du circuit du fluide caloporteur circulant tant dans la canalisation 6 primaire que dans la canalisation 7 secondaire, le fluide ainsi dérivé étant mis à profit pour porter l'insert 8 à la même température que la paroi 3.

Cette dérivation est permise quelle que soit l'épaisseur de la cale 9, les lumières 19, 21, 24, 26 qui y sont réalisées assurant le transit du fluide caloporteur de la paroi 3 vers l'insert 8, et réciproquement.

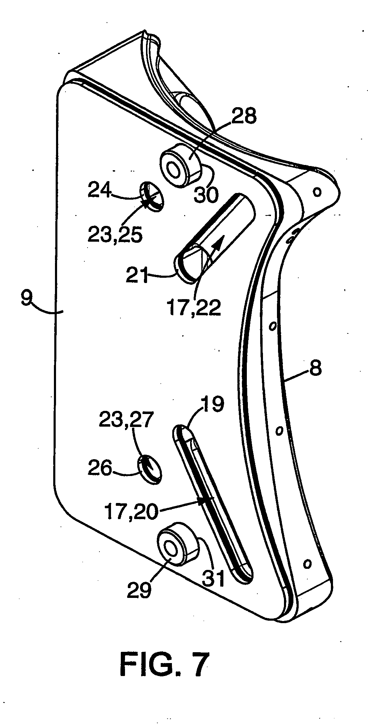

Par ailleurs, comme représenté sur les figures 5 et 7, l'insert 8 est muni de pions 28, 29 en saillie qui traversent des trous 30, 31 percés dans la cale 9, afin de permettre un positionnement précis de celle-ci par rapport à l'insert 8 lors de leur mise en place conjointe dans le logement 10.

Un usinage de précision du moule 1, et plus particulièrement du logement 10, de la cale 9 et de l'insert 8, permet d'éviter l'emploi des joints d'étanchéité à placer entre la paroi 3 et la cale 9 d'une part, et entre la cale 9 et l'insert 8 d'autre part.

## Revendications

1. Moule (1) pour une machine de soufflage de récipients, ce moule (1) comportait
- une paroi (3) définissant une cavité (4) répartie autour d'un axe (X) principal, cette paroi (3) étant munie de canalisations (6, 7) pour la circulation d'un fluide caloporteur au sein de la paroi (3), et
- au moins un insert (8) de moulage monté sur la paroi (3), et muni d'au moins un conduit (17, 23) qui communique avec une canalisation (6, 7) de la paroi (3),
**caractérisé en ce qu'**il comporte au moins une cale (9) de réglage de la position de l'insert (8) par rapport à l'axe (X) principal, interposée entre la paroi (3) et l'insert (8), cette cale (9) étant percée d'au moins une lumière (19, 21, 24, 26) qui débouche, d'une part, sur une canalisation (6, 7) dans la paroi (3), et, d'autre part, sur un conduit (17, 23) dans l'insert (8).

2. Moule (1) selon la revendication 1, **caractérisé en ce que** la cale (9) se présente sous la forme d'une plaque, dont le contour suit celui de l'insert (8).

3. Moule (1) selon la revendication 1 ou 2, **caractérisé en ce que** l'insert (8) est muni de pions (28, 29) en saillie qui traversent des trous (30, 31) de positionnement percés dans la cale (9).

4. Moule (1) selon l'une des revendications 1 à 3, **caractérisé en ce que** ladite paroi (3) est munie d'au moins deux canalisations (6, 7), à savoir une canalisation (6) primaire et une canalisation (7) secondaire, **en ce que** l'insert (8) est muni d'au moins deux conduits (17, 23), à savoir un conduit (17) primaire et un conduit (23) secondaire, et **en ce que** la cale (9) est percée d'au moins deux lumières (19, 21, 24, 26), à savoir une lumière (19, 21) primaire qui débouche d'une part sur la canalisation (6) primaire et d'autre part sur le conduit (17) primaire, et une lumière (24, 26) secondaire qui débouche d'une part sur la canalisation (7) secondaire et d'autre part sur le conduit (23) secondaire.

5. Moule (1) selon la revendication 4, **caractérisé en ce que** la lumière (19, 21) primaire se présente sous la forme d'un trou oblong.

6. Moule (1) selon la revendication 4 ou 5, **caractérisé en ce que** la lumière (24, 26) secondaire se présente sous la forme d'un trou circulaire.

7. Moule (1) selon l'une des revendications 1 à 6, **caractérisé en ce que** la paroi (3) du moule est creusée d'un logement (10) dans lequel sont conjointement reçus la cale (9) et l'insert (8).

8. Moule (1) selon la revendication 7, **caractérisé en ce qu'**au moins une canalisation (6, 7) dans la paroi débouche dans ledit logement (10) en regard d'une lumière (19, 21, 24, 26) dans la cale (9).

9. Moule (1) selon l'une des revendications 1 à 8, **caractérisé en ce que** la cale (9) se présente sous la forme d'un jeu de cales pelables.

10. Moule (1) selon l'une des revendications 1 à 9, **caractérisé en ce que** ledit conduit (17, 23) se présente sous la forme d'une gorge creusée dans une face (18) de l'insert (8) tournée vers la cale (9).

11. Moule (1) selon la revendication 10, **caractérisé en ce que** ledit conduit (17, 23) présente des méandres.

## Claims

1. A mold (1) for a container blow molding machine, said mold (1) comprising:
- a wall (3) defining a cavity (4) distributed about a main axis (X), said wall (3) being provided with passages (6, 7) for circulating a heat transfer fluid within the wall (3); and
- at least one molding insert (8) mounted on the wall (3),and provided with at least one duct (17, 23) that communicates with a passage (6, 7) of the wall (3).
**characterized in that** it comprises at least one shim (9) four adjusting the position of the insert (8) relative to the main axis (X), interposed between the wall (3) and the insert (8), said shim (9) being pierced by at least one port (19, 21, 24, 26) that opens, on the one hand, onto a passage (6, 7) in the wall (3) and, on the other hand, onto a duct (17, 23) in the insert (8).

2. A mold (1) according to claim 1 **characterized in that** the shim (9) is in the form of a plate having a contour that follows that of the insert (8).

3. A mold (1) according to claim 1 or claim 2, **characterized in that** the insert (8) is provided with projecting pins (28, 29) that pass through positioning holes (30, 31) pierced in the shim (9).

4. A mold (1) according to any one of claims 1 to 3, **characterized in that** said wall (3) is provided with at least two passages (6, 7), namely a primary passage (6) and a secondary passage (7), **in that** the insert (8) is provided with at least two ducts (17, 23), namely a primary duct (17) and a secondary duct (23), and **in that** the shim (9) is pierced by at least two ports (19, 21, 24, 26), namely a primary port (19, 21) that opens onto the primary passage (6) and onto the primary duct (17), and a secondary port (24, 26) that opens onto the secondary passage (7) and onto the secondary duct (23).

5. A mold (1) according to claim 4, **characterized in that** the primary port (19, 21) is in the form of an oblong hole.

6. A mold (1) according to claim 4 or claim 5, **characterized in that** the secondary port (24, 26) is in the form of a circular hole.

7. A mold (1) according to any one of claims 1 to 6, **characterized in that** a recess (10) is hollowed into the wall (3) of the mold, in which the shim (9) and the insert (8) are both received.

8. A mold (1) according to claim 7, **characterized in that** at least one passage (6, 7) in the wall opens into said recess (1.0) facing a port (19, 21, 24, 26) in the shim (9).

9. A mold (1) according to any one of claims 1 to 8, **characterized in that** the shim (9) is in the form of a set of peel-off shims.

10. A mold (1) according to any one of claims 1 to 9, **characterized in that** said duct (17, 23) is in the form of a groove hollowed into one face (18) of the insert (8) turned towards the shim (9).

11. A mold (1) according to claim 11, **characterized in that** said duct (17, 23) has meanders.

## Patentansprüche

1. Form (1) für eine Blasformmaschine für Behälter, wobei die Form (1) aufweist:
eine einen Hohlraum (4) definierende Wand (3), die sich um eine Hauptachse (X) erstreckt, wobei diese Wand (3) mit Kanälen (6, 7) für die Zirkulation einer Kühlmittelflüasigkeit innerhalb der Wand (3) versehen ist, und
zumindest einen Formeinsatz (8), der an der Wand (3) befestigt und mit zumindest einer mit einem Kanal (6, 7) der Wand (3) kommunizierenden Leitung (17, 23) versehen ist,
**dadurch gekennzeichnet, dass** sie zumindest mit einem zwischen der Wand (3) und dem Einsatz (8) eingefügten Einstellestück (9) für die Position des Einsatzes (8) hinsichtlich der Hauptachse (X) ausgestattet ist, wobei das Stück (9) mit zumindest einer einerseits über einen Kanal (6, 7) in der Wand (3) und andererseits über eine Leitung (17, 23) im Einsatz (8) mündenden Öffnung (19, 21, 24, 26) durchbohrt ist.

2. Form (1) gemäß Anspruch 1, **dadurch gekennzeichnet, dass** sich das Stück (9) in der Gestalt einer Platte zeigt, deren Kontur derjenigen des Einsatzes entspricht.

3. Form (1) gemäß Anspruch 1 oder 2, **dadurch gekennzeichnet, dass** der Einsatz (8) mit hervorstehenden Stiften (28, 29) versehen ist, die in das Stück (9) gebohrte Positionierungslöcher (30, 31) durchdringen.

4. Form (1) gemäß einem der Ansprüche 1 bis 3, **dadurch gekennzeichnet, dass** die Wand (3) mit zumindest zwei Kanälen (6, 7) versehen ist, nämlich einem primären Kanal (6) und einem sekundärem Kanal (7), **dadurch**, dass der Einsatz (8) mit zumindest zwei Leitungen (17, 23) versehen ist, nämlich einer primären Leitung (17) und einer sekundären Leitung (23), und **dadurch**, dass das Stück (9) mit zumindest zwei Öffnungen (1.9, 21, 24, 26) durchbohrt ist, nämlich einer einerseits über den primären Kanal (6) und andererseits über die primäre Leitung (17) mündenden primären Öffnung (1.9, 21) und einer einerseits über den sekundären Kanal (7) und andererseits über die sekundäre Leitung (23) mündenden sekundären Öffnung (24, 26).

5. Form (1) gemäß Anspruch 4, **dadurch gekennzeichnet, dass** sich die primäre Öffnung (19, 21) in der Gestalt eines längsloche zeigt.

6. form (1) gemäß Anspruch 4 oder 5, **dadurch gekennzeichnet, dass** sich die sekundäre Öffnung (24, 26) in der Gestalt eines Kreislochs zeigt.

7. form (1) gemäß einem der Ansprüche 1 bis 6, **dadurch gekennzeichnet, dass** die Wand (3) der form mit einer Aufnahme (10) ausgehöhlt ist, in der das Stück (9) und der Einsatz (8) gemeinschaftlich empfangen werden.

8. Form (1) gemäß Anspruch 7, **dadurch gekennzeichnet, dass** zumindest ein Kanal (6, 7) in der Wand hinsichtlich einer Öffnung (19, 21, 24, 26) im Stück (9) in die Aufnahme (10) mündet.

9. Form (1) gemäß einem der Ansprüche 1 bis 8, **dadurch gekennzeichnet, dass** sich das Stück (9) in der Gestalt eines herauartchälbaren Stücksatzes zeigt.

10. Form (1) gemäß einem der Ansprüche 1 bis 9, **dadurch gekennzeichnet, dass** sich die Leitung (17, 23) in der Gestalt einer in einer in Richtung des Stücks (9) gedrehten Fläche (18) des Einsatzes (8) ausgehöhlten Rille zeigt.

11. Form (1) gemäß Anspruch 10, **dadurch** gekenntzeichnet, dass sich die Leitung (17, 23) in Windungen zeigt.
